(19)

Europäisches Patentamt
European Patent Office
Office européen des brevets

(11) **EP 4 576 251 A1**

(12) **EUROPEAN PATENT APPLICATION**
published in accordance with Art. 153(4) EPC

(43) Date of publication:
**25.06.2025 Bulletin 2025/26**

(21) Application number: 23909586.2

(22) Date of filing: **31.10.2023**

(51) International Patent Classification (IPC):
*H01M 4/36* (2006.01)  *H01M 4/583* (2010.01)
*H01M 4/134* (2010.01)

(52) Cooperative Patent Classification (CPC):
H01M 4/134; H01M 4/36; H01M 4/38; H01M 4/583;
H01M 4/587; H01M 4/62; H01M 10/0525;
Y02E 60/10

(86) International application number:
**PCT/CN2023/128230**

(87) International publication number:
**WO 2024/139653 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022  CN 202211700443**

(71) Applicants:
• **BTR New Material Group Co., Ltd.**
  **Shenzhen, Guangdong 518106 (CN)**
• **Dingyuan New Energy Technology Co., Ltd.**
  **Huizhou, Guangdong 516227 (CN)**

(72) Inventors:
• **CHEN, Xi**
  **Shenzhen, Guangdong 518106 (CN)**
• **PANG, Chunlei**
  **Shenzhen, Guangdong 518106 (CN)**
• **KONG, Yiming**
  **Shenzhen, Guangdong 518106 (CN)**
• **REN, Jianguo**
  **Shenzhen, Guangdong 518106 (CN)**
• **HE, Xueqin**
  **Shenzhen, Guangdong 518106 (CN)**

(74) Representative: **Studio Torta S.p.A.**
**Via Viotti, 9**
**10121 Torino (IT)**

(54) **NEGATIVE ELECTRODE MATERIAL, PREPARATION METHOD THEREFOR, AND LITHIUM-ION BATTERY**

(57)    Provided are anode material, preparation method therefor, and lithium-ion battery, which relate to the technical field of lithium-ion batteries. The anode material comprises a porous carbon substrate and silicon, the silicon being dispersed in the pores and/or surface of the porous carbon substrate. The preparation method for the anode material comprises: mixing and treating a porous carbon powder and a binder to obtain a porous carbon substrate; and compounding silicon nanoparticles on the porous carbon substrate to obtain the anode material. Adjusting and selecting process parameters allows for reducing the porosity between porous carbon, achieving silicon filling the pores of porous carbon, further forming a high-density anode material, greatly increasing compaction density and volume specific capacity, and improving the related electrochemical performance of the anode material in a lithium-ion battery.

FIG. 1

Mixing and heat treating N different particle sizes of porous carbon powders with a binder to obtain a porous carbon substrate, wherein N≥2

↓

Compounding silicon on the porous carbon substrate to obtain an anode material

## Description

The present application claims priority to the Chinese patent application with application number 2022117004432, titled "ANODE MATERIAL, PREPARATION METHOD THEREFOR, AND LITHIUM-ION BATTERY", submitted to the Patent Office of the People's Republic of China on December 28, 2022. The entire contents of the above-mentioned application are incorporated herein by reference.

## Technical Field

The present disclosure relates to the field of lithium-ion battery technology, particularly to anode material, preparation method therefor, and lithium-ion battery.

## Background

At present, the vast majority of commercial lithium-ion batteries still use graphite with low theoretical specific capacity as an anode material, which seriously limits the application prospects of lithium-ion batteries. Compared with graphite, a silicon anode material has an ultra-high theoretical specific capacity (4200 mAh/g), which can significantly increase the energy density of lithium-ion batteries. However, the electronic conductivity of silicon is low. As an electrode material, it will affect the rate performance, and the volume changes greatly during charging and discharging processes, which will cause an active material to pulverize and fragment, lose effective electrical contact with a current collector, etc., and ultimately leading to rapid capacity decay. In this regard, by compounding silicon and carbon, the application of a silicon anode material can be greatly improved.

Generally speaking, an anode material can be manufactured in a reactor through a chemical vapor infiltration (CVI) method. Specifically, by placing a porous carbon substrate in a reactor and contacting with a thermally decomposable Si-containing compound infiltrating gas at a temperature higher than the decomposition temperature of the compound, Si can be deposited on the surface and inside of the porous carbon. The Si-containing compound in the infiltrating gas is usually a silane gas, which first nucleates on the porous carbon surface and then continuously introduces the infiltrating gas to cause the growth of a Si crystal nucleus. However, in the reactor, there is usually competition between two forms of deposition, namely heterogeneous deposition and homogeneous decomposition deposition. If the process parameters are more favorable for heterogeneous deposition, most Si particles will deposit on the surface of the porous carbon substrate, while if the process parameters are more favorable for homogeneous decomposition deposition, Si particles will decompose into new, very small amorphous particles and be distributed in the pores of the porous carbon substrate. That is to say, different process parameters affect the proportion of these two depositions in the product, which in turn affects the performance of the anode material.

In the existing process, when using silane as a precursor to prepare an anode material, there are several disadvantages: (1) compared to a carbon source gas, a silane gas has a larger molecular weight, smaller infiltration depth, and lower Si deposition efficiency; and (2) if the process parameter settings are not reasonable, CVI is prone to crust formation on the surface of a carbon-based material during densification, which requires further machining treatment, prolongs the preparation cycle, and increases the preparation cost. Obviously, the silicon in the anode material prepared by these processes is difficult to evenly distribute throughout the entire system, and the porosity of the system is too high to fully fill, resulting in poor electrochemical performance of the anode material produced during battery charging and discharging processes. Therefore, it is necessary to research and develop a high-density anode material to improve the electrochemical performance of lithium-ion batteries.

## Summary

In view of this, the present disclosure proposes anode material, preparation method therefor, and lithium-ion battery, which can reduce volume expansion and improve cycling stability.

In a first aspect, the present disclosure provides an anode material, the anode material comprises an active material, the active material comprises a porous carbon substrate and silicon, and the pores and/or surface of the porous carbon substrate are distributed with the silicon; the adsorption constant C value of the anode material is C<200, and the open porosity of an etched material of the anode material is 50%-70%.

In a second aspect, the present disclosure provides an anode material, the anode material comprises an active material, the active material comprises a porous carbon substrate and silicon, and the pores and/or surface of the porous carbon substrate are distributed with the silicon; the adsorption constant C value of the anode material is C<200, the density of an etched material of the anode material is $\rho 1$, and the density of the anode material is $\rho 2$, $50\% \leq (\rho 2 - \rho 1)/\rho 1 \leq 80\%$.

In some embodiments, the particle size of the silicon is 1 nm-100 nm.

In some embodiments, the pore size of the etched material of the anode material is 0 $\mu$m-1 $\mu$m.

In some embodiments, the filling degree of the silicon in the porous carbon substrate is $\geq$80%.

In some embodiments, the density of the anode material is 1.8 g/cm$^3$-2.3 g/cm$^3$, and the density of the etched material of the anode material is 1 g/cm$^3$-1.5 g/cm$^3$.

In some embodiments, the anode material has a pore structure, which comprises mesopores, micropores, and macropores, wherein the volume proportion of the mesopores in all pore structures is >75%, the volume proportion of the micropores in all pore structures is <25%, and the volume proportion of the macropores in all pore structures is <10%.

In some embodiments, the anode material has a pore structure, and the total pore volume of the pore structure measured by a nitrogen adsorption method is <0.05 cm$^3$/g.

In some embodiments, the volume of closed pores in the anode material is $\leq$0.2 cm$^3$/g.

In some embodiments, the adsorption constant C value of the etched material of the anode material is 200<C<500.

In some embodiments, in a nuclear magnetic resonance test of the anode material, there is a Si-C resonance peak between -10 ppm and 20 ppm with an intensity of $D_1$, and a Si resonance peak between -90 ppm and -110 ppm with an intensity of $D_2$, and $D_2/D_1 \geq 100$.

In some embodiments, the particle size of the etched material of the anode material is 1 $\mu$m-50 $\mu$m.

In some embodiments, the silicon comprises nano-silicon.

In some embodiments, the anode material further comprises a carbon coating layer located on at least partial surface of the active material.

In some embodiments, the thickness of the carbon coating layer is 1 nm-100 nm.

In some embodiments, the mass percentage content of silicon in the anode material is 10%-90%.

In some embodiments, the specific surface area of the anode material is 0.5 m$^2$/g-50 m$^2$/g.

In some embodiments, the average particle size of the anode material is 1 $\mu$m-25 $\mu$m.

In a second aspect, the present disclosure provides a preparation method for an anode material, and the preparation method comprises:

Mixing and heat treating N different particle sizes of porous carbon powders and a binder to obtain a porous carbon substrate, wherein N$\geq$2;

Compounding silicon on the porous carbon substrate to obtain the anode material.

In some embodiments, the N different particle sizes of the porous carbon powders are arranged in ascending order according to the particle size, in the two adjacent porous carbon powders, the ratio of D50 of the porous carbon powder with a smaller particle size to D50 of the porous carbon powder with a larger particle size is 0.25-0.9.

In some embodiments, the N different particle sizes of the porous carbon powders are arranged in ascending order according to the particle size, in the two adjacent porous carbon powders, the ratio of the mass of the porous carbon powder with a smaller particle size to the mass of the porous carbon powder with a larger particle size is 0.05-0.75.

In some embodiments, the N different particle sizes of the porous carbon powders are arranged in ascending order according to the particle size, in the two adjacent porous carbon powders, D10 of the porous carbon powder with a larger particle size is not less than D90 of the porous carbon powder with a smaller particle size.

In some embodiments, the N different particle sizes of the porous carbon powders are arranged in ascending order according to the particle size, when N=3, the D50 ratio of the porous carbon powder with a larger size to the porous carbon powder with a medium size to the porous carbon powder with a smaller size is (4-7):(2-3.5):1.

In some embodiments, the N different particle sizes of the porous carbon powders are arranged in ascending order according to the particle size, when N=3, the mass ratio of the porous carbon powder with a larger size to the porous carbon powder with a medium size to the porous carbon powder with a smaller size is (18-25):(6-12):1.

In some embodiments, the N different particle sizes of the porous carbon powders are arranged in ascending order according to the particle size, when N=3, the D50s of the porous carbon powder with a larger size, the porous carbon powder with a medium size, and the porous carbon powder with a smaller size are 100 $\mu$m-500 $\mu$m, 70 $\mu$m-400 $\mu$m, and 20 $\mu$m-130 $\mu$m, respectively.

In some embodiments, the N different particle sizes of the porous carbon powders are arranged in ascending order according to the particle size, when N=3, the average pore size of the porous carbon substrate prepared from three different particle sizes of the porous carbon powder is 2 nm-50 nm.

In some embodiments, the binder comprises polyvinyl butyral.

In some embodiments, the mass ratio of the N different particle sizes of the porous carbon powders to the mass of the binder is (5-20):1.

In some embodiments, the heat treating comprises: heating, pressurizing, and cooling the mixed material after mixing to obtain the porous carbon substrate.

In some embodiments, a chemical vapor infiltration method is used to perform a thermal decomposition reaction to a reaction gas, so that silicon is deposited on the surface and/or in pores of a porous carbon substrate to obtain an anode material.

In some embodiments, the reaction gas comprises a silane gas, hydrogen, and an inert gas.

In some embodiments, the reaction gas comprises a silane gas, which comprises at least one of $Si_nH_{(2n+2)}$ and $Si_nH_{(2n+2)}Z_{(2n+2)-m}$, wherein $n\geq1$, $m<2n+2$, and Z comprises at least one halogen element from F, Cl, Br and I.

In some embodiments, the reaction temperature of the thermal decomposition is 400 °C-800 °C.

In some embodiments, the deposition time is 5 h-500 h.

In some embodiments, the heating curve includes heating at a heating rate of 1 °C/min-50 °C/min to a temperature 10 °C-20 °C lower than the reaction temperature of the thermal decomposition, and then continuing to heat at a heating rate of 0.05 °C/min-0.5 °C/min to the reaction temperature of the thermal decomposition.

In some embodiments, the pressure of the reaction system before introducing the reaction gas is 1 Pa-20 Pa.

In some embodiments, the total pressure of the reaction system after introducing the reaction gas is 0.5 kPa-50 kPa.

In some embodiments, the oxygen content in the reaction gas is $\leq0.5\%$.

In some embodiments, the step of using the chemical vapor infiltration method to perform the thermal decomposition reaction to the reaction gas to deposit silicon on the surface and/or pores of the porous carbon substrate further comprises that: when the reaction gas flows from the front end to the end of the porous carbon substrate, a movable heating coil is used to heat the end of the porous carbon substrate to the reaction temperature of the thermal decomposition, so that the reaction gas undergoes densification infiltration deposition on the porous carbon substrate at the end, and then the movable heating coil is gradually moved from the end to the front end, so that every part of the porous carbon substrate undergoes densification infiltration deposition.

In some embodiments, the reaction gas comprises a silane gas, hydrogen, and an inert gas, and the molar ratio of hydrogen to the silane gas is (5-20):1.

In some embodiments, the reaction gas comprises a silane gas, hydrogen, and an inert gas, and the gas flow of hydrogen is 100 mL/min-500 mL/min.

In some embodiments, the reaction gas comprises a silane gas, hydrogen, and an inert gas, and the gas flow of the inert gas is 200 mL/min-500 mL/min.

In some embodiments, the reaction gas comprises a silane gas, hydrogen, and an inert gas, wherein the hydrogen comprises hydrogen as a diluent gas and hydrogen as a carrier gas, and the gas flow ratio between the hydrogen as a diluent gas and the hydrogen as a carrier gas is (3-10):1.

In a third aspect, the present disclosure provides a lithium-ion battery comprising the anode material as described in the first aspect or the anode material prepared according to the preparation method for the anode material described in the second aspect.

Compared to existing technologies, the technical solution of the present disclosure has at least the following technical effects:

The anode material of the present disclosure comprises silicon and a porous carbon substrate, and silicon is uniformly distributed in the skeleton of the porous carbon substrate. The open porosity of an etched material of the anode material is 50%-70%, which provides space for silicon to accommodate its volume expansion. The adsorption constant of the anode material is controlled to be less than 200, the smaller the adsorption constant C, the smaller the proportion of micropores in the anode material, indicating that mesopores and macropores are mainly present in the anode material; a small amount of mesopores and macropores can provide buffer space for Si expansion during charging and discharging, while ensuring stress dispersion distribution; when the anode material is applied to lithium-ion batteries, the filling degree of silicon can be controlled, the specific capacity of the anode material can be increased, the volume expansion of silicon can be alleviated, the particle strength of the anode material can be improved, and the collapse and breakage of the material structure during electrode sheet rolling or cycling can be reduced. Therefore, under the synergistic effect of the above-mentioned overall structure, the cycling performance and electrochemical performance of the material can be improved.

The anode material of the present disclosure comprises silicon and a porous carbon substrate, and silicon is uniformly distributed in the skeleton of the porous carbon substrate. The density of the etched material of the anode material is $\rho1$, and the density of the anode material is $\rho2$, $50\%\leq(\rho2-\rho1)/\rho1\leq80\%$. On the one hand, the adsorption constant of the anode material is controlled to be less than 200, the smaller the adsorption constant C, the smaller the proportion of micropores in the anode material, indicating that mesopores and macropores are mainly present in the anode material; a small amount of mesopores and macropores can provide buffer space for Si expansion during charging and discharging, while ensuring stress dispersion distribution; on the other hand, the density increase range of the anode material is controlled, then the filling degree of silicon can be controlled, the specific capacity of the anode material can be increased, the volume expansion of silicon can be alleviated, the particle strength of the anode material can be improved, the collapse and breakage of the material structure during electrode sheet rolling or cycling can be reduced, and a balance between high specific capacity, low expansion performance, and high cycling performance of the anode material can be achieved.

Various porous carbon powders with different particle sizes are processed in the present disclosure to obtain a porous carbon substrate, and then silicon is compounded in the pores and/or surfaces of the porous carbon substrate to fill large pores in the porous carbon substrate into smaller pores, forming a high-density anode material, greatly improving the compaction density and volume specific capacity of the anode material. Meanwhile, by using a variety of porous carbon powders with different particle sizes, porous carbon powders with small particle size can be filled between the pores of porous carbon powders with large particle size, improving the density of the porous carbon substrate and thus increasing the density of the anode material.

In the anode material and lithium-ion battery of the present disclosure, by using the above-mentioned anode material, they also have ultra-high compaction density and volume specific capacity, thereby improving the reversible specific capacity and cycling stability of the lithium-ion battery.

**Brief Description of the Drawings**

To describe the technical solution of the embodiments of the present disclosure more clearly, the following briefly describes the drawings used in the embodiments. It should be understood that the following drawings only illustrate certain embodiments of the present disclosure and should not be regarded as limiting the scope of the present disclosure.

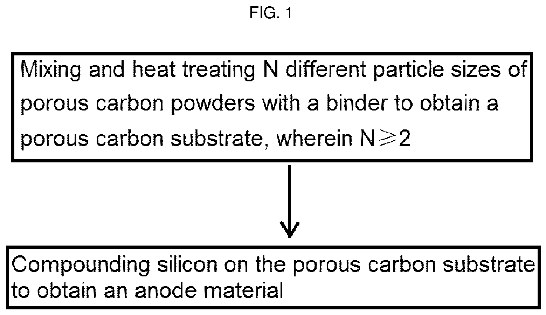

FIG. 1 shows a preparation process flow chart of an anode material.

**Detailed Description of the Embodiments**

The term as used herein:
"prepare from" is equivalent to "include". The terms "include", "comprise", "have", "contain" or other transformations are intended to refer to non-exclusion inclusion. For example, a composition, step, method, product or device comprising elements listed is not limited to including these elements listed, and may also comprise other elements not specifically listed, or inherent elements of the composition, step, method, product or device.
The connective "consist of..." excludes any unstated elements, steps or components. If used in the claims, the expression shall make the claims to be close-ended such that the claims do not include materials other than the materials described, except for the related conventional impurities. When the expression "consist of..." is in a clause of a claim rather than immediately follows the subject matter, the expression merely defines the elements described in the clause; and other elements are not excluded from the entire claims.
Where an amount, concentration, or other value or parameter is expressed in a range, a preferred range, or a series of ranges defined by upper limit and lower limit preferred values, this should be understood to specifically disclose all ranges formed by any pairing of any upper limit value or preferred value with any lower limit value or preferred value, whether this range is separately disclosed or not. For example, when the range "1-5" is disclosed, the described range should be interpreted to include the ranges "1-4", "1-3", "1-2", "1-2 and 4-5", "1-3 and 5" and the like. Where a numerical range is described herein, unless otherwise described, the range is intended to include both end values and all integers and fractions within this range.
In these embodiments, the parts and percentages are both by mass, unless otherwise indicated.
"Part by mass" refers to a basic measurement unit that represents the mass ratio relation of multiple components, and 1 part may represent any unit mass, for example, 1 g, 2.689 g, and the like. Assuming that the A component is in a parts by mass, and the B component is in b parts by mass, then the ratio of the mass of the A component to the mass of the B component is a:b, or the mass of the A component is aK, and the mass of the B component is Bk (K is an arbitrary number, representing a multiple factor). Unmistakably, the sum of parts by mass of all components is not limited to 100 parts, unlike mass fraction.
"And/or" is used to indicate that one or both of the stated circumstances may occur, for example, A and/or B includes (A and B) and (A or B).
In a first aspect, the present disclosure provides an anode material, the anode material comprises an active material, the active material comprises a porous carbon substrate and silicon, wherein the pores and/or surface of the porous carbon substrate are distributed with the silicon; the adsorption constant C value of the anode material is C<200, and the open porosity of an etched material of the anode material is 50%-70%.
It should be noted that the adsorption constant C value is mainly set at the adsorption temperature (RT), which is generally 25°C, the saturated vapor pressure of the adsorbate gas $N_2$ is p0 (unit: kPa), and the saturated multilayer adsorption capacity at the gas equilibrium pressure p is Q (unit: mmol/g). Using $\frac{p/p^0}{Q(1-p/p^0)}$ as the vertical axis and $\rho/\rho^0$ as the horizontal axis to draw, a linear result can be fitted. If the intercept of the fitted line is a and the slope is b, then the adsorption constant C=b/a+1 is defined.
The C value of strong adsorbents such as activated carbon and molecular sieves is generally >200, while the C value of the anode material in the present disclosure is <200, the smaller the adsorption constant C, the smaller the proportion of micropores in the anode material, indicating that mesopores and macropores are mainly present in the anode material; and during the deposition process, as the vast majority of micropores have already been filled with silicon, the remaining pores in the porous carbon substrate are mainly unfilled mesopores and macropores, which are located inside the porous carbon substrate or are closed pores, as well as micropores/smaller micropores formed by the conversion of mesopores/micropores partially filled with silicon, resulting in an adsorption constant of less than 200 for the anode material, and this can not only reserve a certain amount of space to buffer the volume expansion during lithium insertion and extraction, but also ensure the amount of Si filling (that is, the proportion of Si in the anode material is relatively high). At this time, on the one hand, it enables the anode material to have a high specific capacity, and on the other hand, it makes the particle strength high, so that it will not break during the process of preparing electrode sheets by rolling.

The anode material of the present disclosure comprises silicon and a porous carbon substrate, and silicon is uniformly distributed in the skeleton of the porous carbon substrate. The pores in these porous carbon substrates can accommodate silicon, and the remaining pores in the anode material after filling with silicon can accommodate the volume expansion of silicon; moreover, before compounding silicon, the pores of the porous carbon substrate are mainly micropores (within the range of <2 nm), and the opening porosity of an etched material of the anode material is 50%-70%, which is conducive to the dispersion and filling of silicon. After compounding silicon, as the vast majority of micropores have already been filled with silicon, the remaining pores in the porous carbon substrate are mainly unfilled mesopores and macropores, which are located inside the porous carbon substrate or are closed pores, as well as micropores/smaller micropores formed by the conversion of mesopores/micropores partially filled with silicon, resulting in an adsorption constant of less than 200 for the anode material. The smaller the adsorption constant of the anode material, the smaller the proportion of micropores in the anode material, indicating that mesopores and macropores are mainly present in the anode material; a small amount of mesopores and macropores can provide buffer space for Si expansion during charging and discharging, while ensuring stress dispersion distribution of silicon; when the anode material is applied to lithium-ion batteries, the filling degree of silicon can be controlled, the specific capacity of the anode material can be increased, the volume expansion of Si can be alleviated, the particle strength of the anode material can be improved, and the collapse and breakage of the material structure during electrode sheet rolling or cycling can be reduced. Therefore, under the synergistic effect of the above-mentioned overall structure, the cycling performance and electrochemical performance of the material can be improved.

In some embodiments, the density of the etched material of the anode material is $\rho1$, and the density of the anode material is $\rho2$, $50\% \leq (\rho2-\rho1)/\rho1 \leq 80\%$.

In the above-mentioned solution, the anode material comprises silicon and a porous carbon substrate, and silicon is uniformly distributed in the skeleton of the porous carbon substrate. The density of the etched material of the anode material is $\rho1$, and the density of the anode material is $\rho2$, $50\% \leq (\rho2-\rho1)/\rho1 \leq 80\%$. On the one hand, the adsorption constant of the anode material is controlled to be less than 200, the smaller the adsorption constant C, the smaller the proportion of micropores in the anode material, indicating that mesopores and macropores are mainly present in the anode material; a small amount of mesopores and macropores can provide buffer space for Si expansion during charging and discharging, while ensuring stress dispersion distribution; and on the other hand, the density increase range of the anode material is controlled, then the filling degree of silicon can be controlled, the specific capacity of the anode material can be increased, the volume expansion of silicon can be alleviated, the particle strength of the anode material can be improved, the collapse and breakage of the material structure during electrode sheet rolling or cycling can be reduced, and a balance between high specific capacity, low expansion performance, and high cycling performance of the anode material can be achieved.

In some optional embodiments, the particle size of silicon in the anode material is 1 nm-100 nm, which can specifically be 1 nm, 10 nm, 20 nm, 50 nm, 70 nm, 100 nm, or any value between 1 nm and 100 nm.

In some optional embodiments, the open porosity of an etched material of the anode material is 50%-70%, which can specifically be 50%, 52%, 54%, 56%, 58%, 60%, 70%, or any value between 50%-70%.

In some optional embodiments, the pore size of an etched material of the anode material is 0 $\mu$m-1 $\mu$m, which can specifically be 0.001 $\mu$m, 0.01 $\mu$m, 0.05 $\mu$m, 0.1 $\mu$m, 0.3 $\mu$m, 0.5 $\mu$m, 1 $\mu$m, or any value greater than 0 $\mu$m and between 0 $\mu$m and 1 $\mu$m.

In some optional embodiments, the filling degree of silicon in pores of the porous carbon substrate is $\geq 80\%$, which can specifically be 80%, 85%, 90%, 95%, or any value between 80% and 100%. After filling the porous carbon substrate with silicon, the material density will increase; by controlling the density increase range of the anode material, a good balance can be achieved between high specific capacity, low expansion performance, and high cycling performance.

In some optional embodiments, the density of the anode material is 1.8 g/cm$^3$-2.3 g/cm$^3$, which can specifically be 1.8 g/cm$^3$, 2.0 g/cm$^3$, 2.2 g/cm$^3$, 2.3 g/cm$^3$, or any value between 1.8 g/cm$^3$ and 2.3 g/cm$^3$; and the density of an etched material of the anode material is 1 g/cm$^3$-1.5 g/cm$^3$, which can specifically be 1 g/cm$^3$, 1.2 g/cm$^3$, 1.4 g/cm$^3$, 1.5 g/cm$^3$, or any value between 1 g/cm$^3$ and 1.5 g/cm$^3$.

In some optional embodiments, the anode material has a pore structure, which comprises mesopores, micropores, and macropores, wherein the volume proportion of the mesopores in all pore structures is >75%, the volume proportion of the micropores in all pore structures is <25%, and the volume proportion of the macropores in all pore structures is <10%.

It should be noted that the volume proportion of mesopores with a pore size of 2 nm-50 nm refers to the percentage of the pore volume of the mesopores in the total pore volume of the anode material, the volume proportion of micropores with a pore size <2 nm refers to the percentage of the pore volume of the micropores in the total pore volume of the anode material, and the volume proportion of macropores with a pore size >50 nm refers to the percentage of the pore volume of the macropores in the total pore volume of the anode material. The proportion of mesopores and macropores in the final prepared anode material is controlled within the above-mentioned range, which can provide buffer space for Si expansion during charging and discharging. On the other hand, the stress dispersion distribution is ensured, the particle strength of the anode material can be improved, and the collapse and breakage of the material structure during electrode sheet rolling or cycling can be reduced. Therefore, under the synergistic effect of the above-mentioned overall structure, the cycling performance and electrochemical performance of the material can be improved.

In some optional embodiments, the anode material has a pore structure, and the total pore volume of the anode material measured by a nitrogen adsorption method is <0.05 $cm^3$/g, which can specifically be 0.04 $cm^3$/g, 0.035 $cm^3$/g, 0.032 $cm^3$/g, 0.030 $cm^3$/g, 0.028 $cm^3$/g, 0.025 $cm^3$/g, 0.024 $cm^3$/g or 0.02 $cm^3$/g, etc., and is not limited here.

In some optional embodiments, the volume of closed pores in the anode material is $\leq$0.2 $cm^3$/g; It can be understood that the closed pore volume refers to the volume that nitrogen cannot enter during testing using a nitrogen adsorption method. The porous carbon substrate comprises closed pores, which are mainly mesopores based on their pore size, ensuring stress dispersion distribution, and helping to accommodate the increased volume during lithium insertion without damaging the structure of the porous carbon or significantly increasing the overall size of the anode material, and can further enhance the stability of the silicon carbon interface; and the closed pores of the porous carbon reserve buffer space for Si volume expansion during lithium insertion, and on the other hand, the lack of openings connected to the outside makes it difficult for the electrolyte to penetrate, thus eliminating the problem of continuous thickening of a SEI layer.

In some optional embodiments, after testing using a gas adsorption BET method, the adsorption constant C value of an etched material of the anode material is 200<C<500, which can specifically be 200, 250 or 300, 400, 499, etc., and is not limited here.

It should be noted that the calculation method for the adsorption constant C value of an etched material of the anode material is the same as the calculation method for the adsorption constant C value of the above-mentioned anode material.

In a specific embodiment, the particle size of an etched material of the anode material is 1 $\mu$m-50 $\mu$m, preferably 2 $\mu$m-20 $\mu$m. It can be understood that the particle size of an etched material of the anode material can be 1 $\mu$m, 2 $\mu$m, 3 $\mu$m, 4 $\mu$m, 5 $\mu$m, 8 $\mu$m, 10 $\mu$m, 12 $\mu$m, 15 $\mu$m, 17 $\mu$m, 20 $\mu$m, 25 $\mu$m, 30 $\mu$m, 35 $\mu$m, 40 $\mu$m, 45 $\mu$m, or 50 $\mu$m. The particle size of the porous carbon can also be other values between 1 $\mu$m and 50 $\mu$m.

In some optional embodiments, a nuclear magnetic resonance testing is performed on the anode material. In the $^{29}$Si NMR spectrum of the anode material, there is a Si-C resonance peak between -10 ppm and 20 ppm with an intensity of $D_1$, and a Si resonance peak between -90 ppm and -110 ppm with an intensity of $D_2$, and $D_2/D_1$2:100.

It should be noted that there are trace amounts of SiC in the anode material of this embodiment. Due to the non-active nature of SiC, an increase in SiC content can lead to a decrease in specific capacity. When $D_2/D_1$2:100, it indicates that there is a certain bonding force between Si and C in the anode material, and an atomic level bonding force is formed between Si and C. At the same time, crystalline SiC only exists in trace amounts. Therefore, the anode material of the present disclosure can maintain structural stability during charging and discharging processes and exhibit excellent cycling performance. It can be understood that $D_2/D_1$ can be 100, 110, 120, 130, 140, or 150, etc., and is not limited here. The larger the value of $D_2/D_1$ demonstrates the lower the content of non-active SiC, which is beneficial for improving the electrochemical performance of the anode material.

It can be understood that although Si-C bonds exist in the nuclear magnetic resonance results of the anode material, Si-Si bonds are dominant and their strength is much greater than that of Si-C bonds. Therefore, $D_2/D_1\geq$100. As some optional embodiments of the present disclosure, the outermost layer of the anode material also comprises a carbon coating layer. Further preferred, the thickness of the carbon coating layer is 1 nm-100 nm, which can specifically be 1 nm, 10 nm, 20 nm, 50 nm, 70 nm, 100 nm, or any value between 1 nm and 100 nm.

It can be understood that the introduction of the carbon coating layer is mainly to improve the electronic conductivity of the anode material in the anode, further buffer the volume change of silicon, and reduce the excessive generation of SEI film on the surface of the anode material.

In a specific embodiment, the mass percentage content of silicon in the anode material is 10%-90%, preferably 20%-80%. It can be understood that the mass percentage content of silicon in anode material can be 10%, 12%, 14%, 16%, 18%, 20%, 25%, 30%, 35%, 40%, 50%, 60%, 70%, 80% or 90%. The mass percentage content of silicon in the anode material can also be other values between 10% and 90%.

In a specific embodiment, the specific surface area of the anode material is 0.5 $m^2$/g-50 $m^2$/g. It can be understood that the specific surface area of the anode material can be 0.5 $m^2$/g, 1.0 $m^2$/g, 5.0 $m^2$/g, 10 $m^2$/g, 13 $m^2$/g, 16 $m^2$/g, 20 $m^2$/g, 23 $m^2$/g, 26 $m^2$/g, 30 $m^2$/g, $^{33}$ $m^2$/g, 36 $m^2$/g, 40 $m^2$/g, 43 $m^2$/g, 46 $m^2$/g, or 50 $m^2$/g. The specific

surface area of the anode material can also be other values between 0.5 m$^2$/g and 50 m$^2$/g.

In a specific embodiment, the average particle size D50 of the anode material is 1 μm-25 μm, preferably 2 μm-15 μm, and more preferably 3 μm-10 μm. It should be explained that when the average particle size of the anode material is ≥1 μm, it can reduce the decrease in the electrode's tap density, which seriously affects its processing performance as an anode for a lithium-ion battery, reduces the problems of low electrode compaction density and low energy density, and can obtain a suitable volume specific capacity. In addition, when the average particle size of the anode material is ≤25 μm, a slurry forming the electrode can be appropriately coated to a uniform thickness. Optionally, the average particle size D$_{50}$ of the anode material can be 1 μm, 2 μm, 3 μm, 4 μm, 5 μm, 6 μm, 7 μm, 8 μm, 9 μm, 10 μm, 12 μm, 14 μm, 15 μm, 17 μm, 19 μm, 21 μm, 23 μm, or 25 μm. The average particle size D$_{50}$ of the anode material can also be other values between 1 μm and 25 μm.

In a specific embodiment, the anode material further comprises a carbon coating layer located on at least partial surface of the active material. It can be understood that the carbon coating layer, as a shell, can mechanically constrain the active material and improve the electronic conductivity of the anode material in the anode; further the carbon coating layer allows lithium ions to pass through, but reduces the interaction between the electrolyte and internal active materials, further buffer the volume change of silicon, and reduce the excessive generation of SEI film on the surface of the anode material.

In a specific embodiment, the thickness of the carbon coating layer is 1 nm-100 nm. It can be understood that the average thickness of the coating layer can be 1 nm, 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, or 100 nm. The average thickness of the coating layer can also be other values between 1 nm and 100 nm.

In the second aspect, the present disclosure also provides a preparation method for an anode material, as shown in FIG. 1, which comprises:

S1. Mixing and heat treating N different particle sizes of porous carbon powders and a binder to obtain a porous carbon substrate, wherein N≥2;

S2. Compounding silicon on the porous carbon substrate to obtain the anode material.

The present disclosure uses the preparation process to control the relevant physical characteristics of the obtained porous carbon substrate, including pore distribution, porosity, pore shape, etc. of the porous carbon substrate; and on the other hand, controlling the subsequent silicon compounding process, the anode material is further prepared on the skeleton of the prepared porous carbon substrate by adjusting the process parameters, so that the micropores in the anode material dominate, thereby alleviating the volume expansion during battery cycling and ensuring the strength of the anode material particles, reducing the probability of particle collapse and damage during cycling.

N different particle sizes of the porous carbon powders in S1 are arranged in ascending order according to the particle size, and then numbered as C1, C2, C3..., and CN, wherein the average particle size of C1 porous carbon powder is the smallest, while the average particle size of the CN porous carbon powder is the largest.

In some optional embodiments, the ratio of D50 of the porous carbon powder with a smaller particle size to D50 of the porous carbon powder with a larger particle size in adjacent two porous carbon powders is 0.25-0.9. For example, the ratio of D50 particle size of C1 porous carbon powder to that of C2 porous carbon powder is 0.25-0.9, which can specifically be 0.25, 0.3, 0.4, 0.5, 0.6, 0.7, 0.8, 0.9, or any value between 0.25 and 0.9.

In some optional embodiments, the ratio of the mass of the porous carbon powder with a smaller particle size to the mass of the porous carbon powder with a larger particle size in adjacent two porous carbon powders is 0.05-0.75. For example, the ratio of the mass of C2 porous carbon powder to that of C3 porous carbon powder is 0.05-0.75, which can specifically be 0.05, 0.15, 0.25, 0.35, 0.45, 0.55, 0.65, 0.75, or any value between 0.05 and 0.75.

In some optional embodiments, D10 of the porous carbon powder with a larger particle size is not less than D90 of the porous carbon powder with a smaller particle in adjacent two porous carbon powders. For example, D10 particle size of C2 porous carbon powder is not less than D90 particle size of C1 porous carbon powder, and D10 particle size of C3 porous carbon powder is not less than D90 particle size of C2 porous carbon powder.

In a preferred embodiment, the raw material of the porous carbon substrate comprises three different particle sizes of porous carbon powders. Among these three different particle sizes of porous carbon powders, they are classified into C1, C2, and C3 in descending order of particle size.

Preferably, the ratio of D50 particle size of C3:C2:C1 is (4-7):(2-3.5):1, which can specifically be 4:2:1, 4:3.5:1, 5:2:1, 5:3.5:1, 6:2:1, 6:3:1, 6:3.5:1, 7:2:1, 7:3.5:1, or any value between (4-7):(2-3.5):1.

Preferably, the mass ratio of C3:C2:C1 is (18-25):(6-12):1, which can specifically be 18:6:1, 18:12:1, 20:6:1, 20:10:1, 20:12:1, 23:6:1, 23:12:1, 25:6:1, 25:12:1, or any value between (18-25):(6-12):1.

Preferably, the average particle size of C3, C2, and C1, i.e. D50, is 100 μm-500 μm, 70 μm-400 μm, and 20 μm-130 μm, respectively.

Preferably, the average pore size of the porous carbon substrate prepared from three different particle sizes of porous carbon powders is 2 nm-50 nm, which can be 2 nm, 10 nm, 20 nm, 30 nm, 40 nm, 50 nm, or any value between 2 nm and 50 nm.

The method for optimizing the particle size distribution preferably three-level distribution of the porous carbon powder in this disclosure involves using three different particle sizes of porous carbon powders as raw materials for the porous carbon substrate. In this way, during the molding process of the porous carbon substrate, porous carbon particles with medium particle size will fill the gaps between porous carbon particles with large particle size, and porous carbon particles with small particle size will further fill the gaps between porous carbon particles with large particle size and porous carbon particles with medium particle size. If only one particle size of porous carbon powder raw material is used to prepare a porous carbon substrate, there will be large pores between these porous carbon particles, that is, the pores of the porous carbon substrate are large. Even if silicon infiltrates into it, it will affect the densification of the anode material, resulting in a higher porosity and pore size of the anode material, which has a negative impact on the volume specific capacity and compaction density of the composite material. Therefore, using a variety of porous carbon powders with different particle sizes as raw materials for the porous carbon substrate is beneficial for improving the density of the prepared anode material.

In some optional embodiments, the binder in S1 can choose to use polyvinyl butyral.

In some optional embodiments, the ratio of the total mass of the N different particle sizes of the porous carbon powder in S1 to the mass of the binder is (5-20):1, which can specifically be 5:1, 10:1, 15:1, 20:1, or any value between (5-20):1. An appropriate amount of binder can mix and adhere porous carbon particles together. Too much binder may lead to a decrease in the conductivity of the material, while too little may result in a decrease in the stability of the anode material particles. By controlling the amount of binder added, it is possible to increase the specific capacity of the anode material while ensuring effective bonding and compression of porous carbon particles together, thereby improving the electrochemical performance of the material.

In some optional embodiments, the mixing mode in S1 includes at least one of VC mixing, manual mixing, room temperature film pressing and spray drying.

In some optional embodiments, the heat treating in S1 comprises: heating, pressurizing, and cooling the mixed material after mixing to obtain a porous carbon substrate.

Specifically, the mixed material after the first mixing can be laid flat in a mold, and then the mold can be heated, pressurized, cooled, and de-molded to obtain a porous carbon substrate. And before the mixed material is laid flat on the mold, a mold release agent needs to be applied to the inner surface of the mold to facilitate the rapid extraction of the porous carbon substrate.

In some optional embodiments, the mold includes a steel mold.

In some optional embodiments, the temperature for heating is 50 °C-500 °C, which can specifically be 50°C, 100°C, 200°C, 300°C, 400°C, 500°C, or any value between 50°C and 500 °C; and the time is 0.5 h-5 h, which can specifically be 0.5 h, 1 h, 2 h, 3 h, 4 h, 5 h, or any value between 0.5 h and 5 h.

In some optional embodiments, the pressure for pressurizing is 5 MPa-50 MPa, which can specifically be 5 MPa, 10 MPa, 20 MPa, 30 MPa, 40 MPa, 50 MPa, or any value between 5 MPa and 50 MPa. The time is 0.2 h-10 h, which can specifically be 0.5 h, 1 h, 2 h, 3 h, 4 h, 5 h, or any value between 0.5 h and 5 h.

It should be noted that the correct selection of the porous carbon substrate is crucial for achieving silicon infiltration into the porous carbon substrate. If the porosity and pore size of the substrate are too large, the density of a composite material produced by silicon infiltration in the substrate will be low; and if they are too small, it will be difficult to deeply introduce a silicon source gas into deeper areas of pores, so that the gas can form silicon in them. Therefore, one of the research objectives of the present disclosure is to find suitable process parameters for deeply introducing silicon into the pores of the porous carbon substrate used, and to achieve a correct balance between good mechanical strength and electrochemical performance in the prepared composite material.

In some optional embodiments, the compounding method in S2 comprises any one of a chemical vapor infiltration method, a dry mixing process, and a wet mixing process, with the chemical vapor infiltration method being more preferred.

Among them, the dry mixing process involves performing ball milling and dry mixing to the porous carbon substrate with silicon, while the wet mixing process involves mixing the porous carbon substrate with a silicon-containing solution.

In some optional embodiments, the chemical vapor infiltration method used in the compounding of the present disclosure comprises: placing the porous carbon substrate in an infiltration furnace, vacuuming the infiltration furnace, heating it to the reaction temperature, introducing a silicon source gas, and performing infiltration deposition.

In some embodiments, a chemical vapor infiltration method is used to perform a thermal decomposition reaction to a reaction gas, so that silicon is deposited on the surface and/or pores of the porous carbon substrate to obtain an anode material.

In some embodiments, the reaction gas comprises a silane gas, hydrogen, and an inert gas.

In some embodiments, the reaction gas comprises a silane gas, which comprises at least one of $Si_nH_{(2n+2)}$ and $Si_nH_{(2n+2)}Z_{(2n+2)-m}$, wherein $n \geq 1$, $m < 2n+2$, and Z comprises at least one halogen element from F, Cl, Br and I.

In some optional embodiments, the reaction temperature of the thermal decomposition is 400 °C-800 °C, which can specifically be 400 °C, 500°C, 600°C, 700°C, 800°C, or any value between 400°C and 800°C.

In some optional implementations, the deposition time is 5 h-500 h, which can specifically be 5 h, 10 h, 100 h, 250 h, 500 h, or any value between 5 h and 500 h.

In some optional embodiments, the pressure of the reaction system before introducing the reaction gas is 1 Pa-20 Pa, which can specifically be 1 Pa, 5 Pa, 10 Pa, 15 Pa, 20 Pa, or any value between 1 Pa and 20 Pa.

In some optional embodiments, the oxygen content in the reaction system is ≤0.5%.

Furthermore, after introducing the reaction gas, the total pressure of the reaction system is 0.5 kPa-50 kPa, which can specifically be 0.5 kPa, 1 kPa, 5 kPa, 10 kPa, 20 kPa, 30 kPa, 40 kPa, 50 kPa, or any value between 0.5 kPa and 50 kPa.

In some optional embodiments, the heating curve during heating includes raising the temperature at a heating rate of 1 °C/min-50 °C/min, which can specifically be 1 °C/min, 10 °C/min, 20 °C/min, 30 °C/min, 40 °C/min, 50 °C/min, or any value between 1 °C/min and 50 °C/min to 10 °C-20 °C below the desired reaction temperature, then continuing heating at a heating rate of 0.05 °C/min-0.5 °C/min to the desired reaction temperature, and then being more preferred to continue heating at a heating rate of 0.1 °C/min.

It should be noted that the key to improving the densification rate of the chemical vapor infiltration (CVI) method is to ensure that the silane gas does not decompose and deposit before entering the pores of the porous carbon, but rapidly decomposes and deposits after entering the pores. However, increasing the reaction temperature during infiltration and increasing the flow rate and pressure of a reactive silicon source gas can only simultaneously increase the infiltration rate of silicon, making it easier for silicon to infiltrate the surface of the material rather than the pores. Therefore, these commonly used methods are not conducive to improving the densification rate.

In the present disclosure, in order to improve the densification speed of CVI, vacuuming is first applied to make the pressure inside and outside the porous carbon substrate close to zero. Then, the temperature inside the infiltration furnace is rapidly raised to about 10 °C-20 °C below the gas decomposition temperature at a heating rate of 1 °C/min-50 °C/min. Then, the temperature is slowly raised to the gas decomposition temperature at a heating rate of 0.1 °C/min, ensuring that the temperature inside and outside the porous carbon substrate remains consistent and the thermodynamic conditions are stable. Then, a silane gas diluted with inert gases such as H2 and argon are introduced into the infiltration furnace, which can ensure the uniform diffusion of the silane gas inside the porous carbon and facilitate its uniform infiltration.

In some optional embodiments, performing infiltration deposition further comprises: when the silicon source gas flows from the front end to the end of the porous carbon substrate, a movable heating coil is used to heat the end of the porous carbon substrate to the reaction temperature of the gas, so that the silicon source gas undergoes densification reaction on the porous carbon substrate at the end, and performs infiltration deposition; and then the movable heating coil is gradually moved from the end to the front end, so that every part of the porous carbon substrate undergoes densification infiltration deposition.

It can be understood that using a movable coil to heat and perform infiltration deposition the porous carbon substrate in the infiltration furnace ensures that every part of the porous carbon substrate can undergo densification reaction as much as possible, resulting in a high-density anode material and uniform distribution of silicon on the porous carbon substrate.

In some optional embodiments, the molar ratio of hydrogen to the silane gas is (5-20):1, which can specifically be 5:1, 10:1, 15:1, 20:1, or any value between (5-20):1. It can be understood that in a silicon source gas, argon is mainly a diluent gas, while hydrogen is both a diluent gas and a carrier gas.

In some optional embodiments, the gas flow ratio of hydrogen as a diluent gas to a hydrogen as a carrier gas is (3-10):1, which can specifically be 3:1, 5:1, 8:1, 10:1, or any value between (3-10):1.

In some optional embodiments, the flow rate of hydrogen is 100 mL/min-500 mL/min, which can specifically be 100 mL/min, 200 mL/min, 300 mL/min, 400 mL/min, 500 mL/min, or any value between 100 mL/min and 500 mL/min.

In some optional embodiments, the flow rate of argon is between 200 mL/min-500 mL/min, which can specifically be 200 mL/min, 300 mL/min, 400 mL/min, 500 mL/min, or any value between 200 mL/min and 500 mL/min.

In some optional embodiments, after the infiltration deposition is completed, it further comprises: stopping the power supply and introducing a silicon source gas, closing a vacuum system used for vacuuming, and continuously introducing argon into an infiltration furnace until the pressure inside the infiltration furnace reaches atmospheric pressure, then opening a gas release valve to cool the temperature of the infiltration furnace to room temperature, and then stopping the introduction of argon to remove the prepared product.

It should be noted that the anode material prepared by a chemical vapor infiltration has a porosity of approximately 10%-15%, wherein silicon is dispersed and embedded in the porous carbon substrate.

In some embodiments, the method further comprises: using solid-phase carbon coating treatment, liquid-phase carbon coating treatment, or gas-phase carbon coating treatment, carbon source and the intermediate product prepared after the compounding are carried out carbon coating treatment.

In some embodiments, the coating treatment comprises the following steps: mixing the intermediate product with a carbon source, controlling the thermal cracking of the carbon source in a protective atmosphere to form a carbon coating layer on the surface of the intermediate product.

In some implementations, the carbon source comprises a gas-phase carbon source.

In some embodiments, the carbon source comprises a gas-phase carbon source, and the gas-phase carbon source comprises a gas-phase hydrocarbon carbon source.

In some embodiments, the carbon source comprises a gas-phase carbon source, which comprises at least one of methane, acetylene, ethylene, ethane, propane, propylene, propyne, acetone, and benzene.

In some embodiments, the carbon source comprises a solid-phase carbon source.

In some embodiments, the carbon source comprises a solid-phase carbon source, and the solid-phase carbon source comprises a solid-phase organic carbon source.

In some embodiments, the carbon source comprises a solid-phase carbon source, the solid-phase carbon source comprises at least one of citric acid, glucose, asphalt, phenolic resin, and furfural resin.

In some embodiments, the carbon source includes a liquid-phase carbon source.

In some embodiments, the carbon source comprises a liquid-phase carbon source, and the liquid-phase carbon source comprises a liquid-phase organic carbon source.

In some embodiments, the carbon source comprises a liquid-phase carbon source, and the liquid-phase carbon source comprises at least one of n-hexane, toluene, benzene, xylene, methanol, ethanol, propanol, butanol, pentanol, acetone, butanone, 2-pentanone, methyl acetate, ethyl acetate, propyl acetate, butyl acetate, and pentyl acetate.

In some embodiments, the temperature of thermal cracking is 600 °C-1200 °C.

In some embodiments, the heating rate of thermal cracking is 0.1 °C/min-50 °C/min.

The anode material prepared in the present disclosure can be used as an anode material applied in a lithium-ion battery. Specifically, after applying the anode material in the lithium-ion battery, its first reversible specific capacity is $\geq$2000 mAh/g, the expansion rate is <38% after 50 cycles of circulation, and the capacity retention rate is >87%. According to in-situ XRD data, there are always silicon characteristic peaks of (111), (220), and (311) when the anode material is initially discharged to 0.05 V vs Li/Li$^+$; and at 0.01 V vs Li/Li$^+$, a c-Li$_{15}$Si$_4$ peak will appear in the anode material. According to in-situ TEM and selected area electron diffraction, the surface of silicon is lithiated to form Li$_x$Si, while the interior is crystalline silicon. After one cycle of cycling, Li$_x$Si on the silicon surface delithiates to form amorphous Si(a-Si), while the interior remains crystalline silicon.

The present disclosure performs adsorption and desorption tests on a porous carbon substrate prepared using three different particle sizes of porous carbon powders. The adsorption and desorption curves exhibit Type I, which exhibits a typical Langmuir isotherm (comprising narrow microporous materials with pore widths less than 1 nm and mixtures containing narrow mesoporous materials with pore widths less than 2.5 nm); and the adsorption and desorption curves of the prepared anode material is IV(a) type, which is accompanied by hysteresis loop after capillary condensation (these are the typical adsorption and desorption curves of mesoporous materials).

In the process of studying the anode material and the preparation method therefor of the present disclosure, the inventors tested the prepared porous carbon substrate and anode material through the following testing methods, as follows:

The porosity can be obtained by calculating the product of the number of pores per unit weight of the material (cm$^3$/g) and the bulk density (g/cm$^3$). Among them, the (bulk) density can be obtained by dividing the mass of the material by the volume of the sample; and the number of pores per unit weight can be further measured using conventional equipment or a mercury porosimeter under known conditions.

The oxygen content in the infiltration furnace can be tested using the Bacharach model 0024-7341 oxygen/-carbon monoxide meter.

Using SEM to confirm the particle structure in the material, combined with EDS, the elemental ratios of Si, O, and C in the material can be characterized and analyzed to determine the phase composition in the material.

A laser particle size analyzer is used to test D50, D90, and D10 of the material particle size, and then the value of (D90-D10)/D50 is calculated to ensure that the material particle size has a symmetrical distribution similar to a normal distribution. Among them, in the volume-based distribution, the cumulative 10% diameter is D10, the cumulative 50% diameter is D50, and the cumulative 90% diameter is D90.

The TriStar 3000 specific surface area and pore size analyzer equipment from the Micromeritics Instrument Corporation is used to test the specific surface area of the material.

The XRD peaks of the material are obtained using a Panaco X'pert Pro X-ray diffractometer, and then the Si peak in XRD is fitted using Jade 6.5 software to obtain the size of the silicon microcrystals.

29Si MAS NMR standard silicon structure chemical shift: 29Si MAS NMR (29Si Magic Angle Spinning Nuclear Magnetic Resonance Spectroscopy) is used, and the instrument model is Bruker AV 300 nuclear magnetic resonance spectrometer. For quantitative analysis, single pulses are used during the testing process instead of cross polarization methods. The pulse width is 4.5 ut, $\theta$ is 54.7°, the relaxation delay (i.e. the time delay between two samples) is 5 seconds, and the rotational speed is 7 kHz. TMS is used as a chemical shift standard for measuring.

SEM or TEM image measurement of silicon particle size: SEM or TEM images of the anode material are saved. Nano Measurer software is run, the SEM or TEM image that needs to be counted is opened, the ruler is set, and the mouse is dragged to mark the particles on the image to obtain their particle size. Five 100 $\mu$m * 75 $\mu$m regions are randomly selected, and 20 nano silicon particles within each region are randomly selected for particle size statistics to obtain their particle size distribution range. Origin software is used to fit the obtained granularity values with a normal distribution to obtain the mean and standard deviation, with a standard deviation of $\leq$0.2.

Weight method for testing silicon content: a box type atmosphere furnace is used to burn the sample in an $O_2$ atmosphere, causing the silicon in the sample to react into $SiO_2$, and after C combustion, it becomes $CO_2$ and is discharged, then the sample is weighed, and the silicon content is calculated.

C-value, specific surface area, and pore volume testing method: Microperetics ASAP 2460 is used for microporous and mesoporous analysis. At liquid nitrogen temperature, the equilibrium adsorption capacity of nitrogen on the surface of an object is related to its pore size and other characteristics. Combining the law of adsorption capacity changing with relative pressure during the adsorption process, multiple models can be fitted for pore size calculation. The report generated by the software uses density functional theory (DFT) methods to calculate pore size distribution, total pore volume, and pore volume within a certain range.

The testing method for the open porosity of an etched material of the anode material: about 0.5 g of the anode material sample is weighed and placed in a platinum crucible, 5 mL of $HNO_3$ and 10 mL of HF mixed acid are added, and after the mixed acid reacts stably with the sample, the platinum crucible is placed on a 350 °C electric heating plate to heat and remove the acid until hydrofluoric acid evaporates without emitting white smoke; and after the crucible cools down, 6 mL of HCl is added and heated until the residue is completely dissolved, the rest is an etched anode material.

Open porosity refers to the ratio of the volume of open pores in a sample to the total volume of the sample. Open pores refer to pores with an open edge that can be connected to liquids or gases in the environment. In practical applications, open porosity is commonly used to describe the properties and performance of materials such as porous media, filter materials, and magnetic materials.

The measurement of open porosity is usually carried out using methods such as gas infiltration and liquid displacement. Among them, gas infiltration method is used to measure the average diameter and pore volume of open pores, and then the open porosity is calculated through a formula. The liquid displacement method measures the volume of open pores by immersing them in liquid, and the open porosity can also be obtained.

Closed porosity refers to the ratio of the volume of closed pores in a sample to the total volume of the sample. Closed pores refer to pores with closed edges that are not connected to liquids or gases in the environment, and are generally used in geological exploration and other fields.

The measurement of closed porosity usually uses methods such as density method and helium measurement method: for example, taking anhydrous ethanol with a volume of V1 into a measuring cylinder, immersing the dry material in it for 5 min, vacuum pumping until there are no bubbles in the ethanol, and recording the ethanol volume as V2 at this time; and taking out the material and recording the volume as V3 at this time. The porosity is calculated by: (V1-V3)/(V2-V3) * 100%. 3 samples are measured per group and the average is taken.

Testing method for filling degree of silicon: determining the true density of an etched material of the anode material as $\rho$1 and the specific pore volume as V1, then the apparent density $\rho$2=V1+1/$\rho$1, the porosity of C material as $\theta$1=1-$\rho$2/$\rho$1, the true density of the anode material as $\rho$3 and the specific pore volume as V2, then the apparent density $\rho$4=V2+1/$\rho$3, and the porosity of C material as $\theta$2=1-$\rho$4/$\rho$3, then the filling rate of silicon as ($\theta$2-$\theta$1)/$\theta$1. The pore volume testing method has been added in the specific surface area test and will not be repeated.

Testing method for true density: using a Beishide 3H-2000TD/Quantachrome 5200e true density meter, applying the Archimedes principle of gas displacement (density=mass/volume), and utilizing Bohr's law (PV=nRT) of inert gases with small molecular diameters under certain conditions, the true volume of the tested material is accurately measured to obtain its true density.

Lithium ion battery performance testing: preparing an anode slurry with anode material, conductive carbon black Super-P (5)+conductive graphite SFG-6(10), and aqueous dispersion of acrylonitrile multicomponent copolymer (LA133 water-based binder) in a mass ratio of 75:15:10, coating it on copper foil, and drying it to prepare an anode sheet. A button type battery is assembled in a glove box filled with Ar gas, using lithium metal sheets as the counter electrode. The first reversible specific capacity and ICE of the button battery are obtained by performing charging and discharging tests on the button battery within the charging and discharging range of 0.01-5 V at a current density of 0.1 C.

An anode slurry is prepared with the mixture of anode material and graphite, conductive carbon black Super-P, conductive carbon black KS-6, carboxymethyl cellulose sodium CMC, and styrene butadiene rubber SBR in a mass ratio of 92:2:2:2:2, coated on copper foil, and dried to prepare an anode sheet. Among them, the proportion of anode material and graphite in the mixture of anode material and graphite is determined by the first reversible specific capacity of the two and the capacity required for their combination. A button type battery is assembled in a glove box filled with Ar gas, using lithium metal sheets as the counter electrode. 50 repeated charging and discharging tests are performed on the button type battery with a current density of 1 C in the charging and discharging range of 0.01 V-5 V to obtain the capacity retention rate and electrode sheet thickness expansion rate of the battery after 50 cycles.

The following will provide a detailed description of the embodiments of the present disclosure in conjunction with specific embodiments. However, those skilled in the art will understand that the following embodiments are only used to illustrate the present disclosure and should not be considered as limiting the scope of the present disclosure. If specific conditions are not specified in the embodiments, follow the conventional conditions or conditions recommended by the manufacturer. The reagents or instruments used without specifying the manufacturer are conventional products that can be obtained through commercial purchase.

Embodiment 1

This embodiment provided an anode material, and the specific preparation method therefor comprised:

(1) 65% D50=150 $\mu$m porous carbon, 22% D50=80 $\mu$m porous carbon, 3% D50=30 $\mu$m porous carbon, and 10% polyvinyl butyraldehyde ester were performed VC mixing according to their mass percentages;

(2) A layer of polytetrafluoroethylene paper was stuck to the working surface of a steel mold, the inner surface of the mold was evenly coated with dimethyl silicone oil, then the mixed powder from step (1) was poured into the mold in a tiled way, the mold was placed in an oven and heated at 200 °C for 1 h, and finally, a pressure of 10 MPa was applied to the mold on a press to obtain a porous carbon substrate;

(3) The porous carbon substrate was loaded into a CVI infiltration furnace, the CVI infiltration furnace was vacuumed to evacuate the air inside the furnace, and vacuuming was stopped when the furnace pressure reached 1 Pa;

(4) The CVI infiltration furnace was powered, and the temperature was raised to 400°C at a rate of 8 °C/min, then raised to 420 °C at a rate of 0.1 °C/min, the vacuum system was restarted, the furnace was vacuumed to 1 Pa, and then a mixed gas of silane, H2, and Ar were introduced from the bottom to the top of the vertical CVI furnace, the H2 gas flow rate was 180 mL/min, the Ar flow rate was 300 mL/min, and the molar ratio of H2 to silane was 12; the flow ratio of diluted H2 to carrier gas H2 was 5;

(5) The pumping speed of the vacuum pump was adjusted to control the infiltration pressure inside the CVI furnace at 0.5 kPa, and the infiltration time was 60 h, at this point, the induction coil first heated up the 25% working range of the top of the furnace body, and after a reaction time of 36 h, it gradually moved downwards to complete the densification process of the entire porous carbon substrate, the porosity of the composite material was 13%;

(6) After the completion of CVI chemical vapor densification treatment, the power supply and reaction gas were stopped, the vacuum system was closed, and Ar gas was introduced into the CVI furnace until the pressure reached atmospheric pressure, the gas release valve was opened and Ar gas introducing was stopped after the temperature inside the CVI furnace cooled to room temperature;

(7) The material was taken out, ultrasonically cleaned with ethanol for 30 min, and dried at 80 °C to obtain an anode material, wherein the size of silicon was 2 nm-100 nm.

Embodiment 2

This embodiment provided an anode material, and the specific preparation method therefor comprised:

(1) 63% D50=250 $\mu$m porous carbon, 26.5% D50=190 $\mu$m porous carbon, 3.5% D50=60 $\mu$m porous carbon, and 7% PVB were performed VC mixing according to their mass percentages;

(2) A layer of polytetrafluoroethylene paper was stuck to the working surface of a steel mold, the inner surface of the mold was evenly coated with dimethyl silicone oil, then the mixed powder was poured into the mold in a tiled way, the mold was placed in an oven and heated at 150 °C for 2 h, and finally, a pressure of 20 MPa was applied to the mold on a press to obtain a porous carbon substrate;

(3) The porous carbon substrate was loaded into a CVI furnace, the CVI furnace was vacuumed to evacuate the air inside the CVI furnace, and vacuuming was stopped when the CVI furnace pressure reached 5 Pa;

(4) The CVI furnace was powered, and the temperature was raised to 400°C at a rate of 6 °C/min, and raised to 420 °C at a rate of 0.1 °C/min, the vacuum system was restarted to vacuum to 6 Pa, and then a mixed gas of silane, H2, and Ar were introduced from the bottom to the top of the vertical CVI furnace, the H2 gas flow rate was 350 mL/min, the Ar flow rate was 380 mL/min, and the molar ratio of H2 to silane was 3, and the flow ratio of diluted H2 to carrier gas H2 was 8;

(5) The pumping speed of the vacuum pump was adjusted to control the infiltration pressure inside the CVI furnace at 5 kPa, and the infiltration time was 80 h, at this point, the induction coil first heated up the 25% working range of the top of the furnace body, and after a reaction time of 36 h, it gradually moved downwards to complete the densification process of the entire porous carbon substrate, the porosity of the composite material was 12%;

(6) After the completion of CVI chemical vapor densification treatment, the power supply and reaction gas were stopped, the vacuum system was closed, and Ar gas was introduced into the CVI furnace until the pressure reached atmospheric pressure, the gas release valve was opened and Ar gas introducing was stopped after the temperature inside the CVI furnace cooled to room temperature;

(7) The composite material was taken out, ultrasonically cleaned with anhydrous ethanol for 35 min, and dried at 100 °C drying oven to obtain an anode material, wherein the size of silicon was 5 nm-80 nm.

Embodiment 3

This embodiment provided an anode material, and the specific preparation method therefor comprised:

(1) 65% D50=370 $\mu$m porous carbon, 24% D50=250 $\mu$m porous carbon, 3% D50=90 $\mu$m porous carbon, and 8% PVB were performed VC mixing according to their mass percentages;

(2) A layer of polytetrafluoroethylene paper was stuck to the working surface of a steel mold, the inner surface of the mold was evenly coated with dimethyl silicone oil, then the mixed powder was poured into the mold in a tiled way, the mold was placed in an oven and heated at 250 °C for 0.5 h, and finally, a pressure of 25 MPa was applied to the mold on a press to obtain a porous carbon substrate;

(3) The porous carbon substrate was loaded into a CVI furnace, the CVI furnace was vacuumed to evacuate the air inside the CVI furnace, and vacuuming was stopped when the deposition furnace pressure reached 5 Pa;

(4) The CVI furnace was powered, and the temperature was raised to 400°C at a rate of 10 °C/min, and raised to 450 °C at a rate of 0.2 °C/min, the vacuum system was restarted, the furnace was vacuumed to 10 Pa, and then a mixed gas of silane, H2, and Ar were introduced from the bottom to the top of the vertical CVI furnace, the H2 gas flow rate was 300 mL/min, the Ar flow rate was 380 mL/min, and the molar ratio of H2 to silane was 4, and the flow ratio of diluted H2 to carrier gas H2 was 8;

(5) The pumping speed of the vacuum pump was adjusted to control the deposition pressure inside the CVI furnace at 2.5 kPa, and the infiltration time was 300 h, at this point, the induction coil first heated up the 25% working range of the top of the furnace body, and after a reaction time of 36 h, it gradually moved downwards to complete the densification process of the entire porous carbon substrate, the porosity of the composite material was 15%;

(6) After the completion of CVI chemical vapor densification treatment, the power supply and reaction gas were stopped, the vacuum system was closed, and Ar gas was introduced into the CVI furnace until the pressure reached atmospheric pressure, the gas release valve was opened and Ar gas introducing was stopped after the temperature inside the CVI furnace cooled to room temperature;

(7) The composite material was taken out, ultrasonically cleaned with ethanol for 60 min, and dried at 90 °C in a drying oven to obtain an anode material, wherein the size of silicon was 10 nm-90 nm.

Embodiment 4

This embodiment provided an anode material, and the specific preparation method therefor comprised:

(1) 64% D50=500 $\mu$m porous carbon, 27% D50=350 $\mu$m porous carbon, 3% D50=120 $\mu$m porous carbon, and 6% PVB were performed VC mixing according to their mass percentages;

(2) A layer of polytetrafluoroethylene paper was stuck to the working surface of a steel mold, the inner surface of the mold was evenly coated with dimethyl silicone oil, then the mixed powder was poured into the mold in a tiled way, the mold was placed in an oven and heated at 350 °C for 3 h, and finally, a pressure of 5 MPa was applied to the mold on a press to obtain a porous carbon substrate;

(3) The porous carbon substrate was loaded into a CVI furnace, the CVI furnace was vacuumed to evacuate the air inside the CVI furnace, and vacuuming was stopped when the CVI furnace pressure reached 5 Pa;

(4) The CVI furnace was powered, and the temperature was raised to 420°C at a rate of 8 °C/min, and raised to 450°C at a rate of 0.1 °C/min, the vacuum system was restarted to vacuum to 10 Pa, and then a mixed gas of silane, $H_2$, and Ar were introduced from the bottom to the top of the vertical CVI furnace, the $H_2$ gas flow rate was 300 mL/min, the Ar flow rate was 380 mL/min, and the molar ratio of $H_2$ to silane was 2.5, and the flow ratio of diluted $H_2$ to carrier gas $H_2$ was 10;

(5) The pumping speed of the vacuum pump was adjusted to control the deposition pressure inside the CVI furnace at 0.9 kPa, and the infiltration time was 60 h, at this point, the induction coil first heated up the 25% working range of the top of the furnace body, and after a reaction time of 40 h, it gradually moved downwards to complete the densification process of the entire porous carbon substrate, the porosity of the composite material was 15%;

(6) After the completion of CVI chemical vapor densification treatment, the power supply and reaction gas were stopped, the vacuum system was closed, and Ar gas was introduced into the CVI furnace until the pressure reached atmospheric pressure, the gas release valve was opened and Ar gas introducing was stopped after the temperature inside the CVI furnace cooled to room temperature;

(7) The composite material was taken out, ultrasonically cleaned with ethanol for 30 min, and dried at 100°C in a drying oven to obtain an anode material, wherein the size of silicon was 20 nm-90 nm.

Embodiment 5

This embodiment provided an anode material, and the specific preparation method therefor comprised:

(1) 63.5% D50=300 μm porous carbon, 24% D50=235 μm porous carbon, 3.5% D50=75 μm porous carbon, and 9% PVB were performed VC mixing according to their mass percentages;

(2) A layer of polytetrafluoroethylene paper was stuck to the working surface of a steel mold, the inner surface of the mold was evenly coated with dimethyl silicone oil, then the mixed powder was poured into the mold in a tiled way, the mold was placed in an oven and heated at 280 °C for 2 h, and finally, a pressure of 30 MPa was applied to the mold on a press to obtain a porous carbon substrate;

(3) The porous carbon substrate was loaded into a CVI furnace, the CVI furnace was vacuumed to evacuate the air inside the CVI furnace, and vacuuming was stopped when the CVI furnace pressure reached 5 Pa;

(4) The CVI furnace was powered, and the temperature was raised to 420°C at a rate of 10 °C/min, and raised to 440°C at a rate of 0.1 °C/min, the vacuum system was restarted to vacuum to 5 Pa, and then a mixed gas of silane, $H_2$, and Ar were introduced from the bottom to the top of the vertical CVI furnace, the $H_2$ gas flow rate was 320 mL/min, the Ar flow rate was 360 mL/min, and the molar ratio of $H_2$ to silane was 2.5, and the flow ratio of diluted $H_2$ to carrier gas $H_2$ was 5;

(5) The pumping speed of the vacuum pump was adjusted to control the infiltration pressure inside the CVI furnace at 1.1 kPa, and the infiltration time was 300 h, at this point, the induction coil first heated up the 25% working range of the top of the furnace body, and after a reaction time of 36 h, it gradually moved downwards to complete the densification process of the entire porous carbon substrate, the porosity of the composite material was 13%;

(6) After the completion of CVI chemical vapor densification treatment, the power supply and reaction gas were stopped, the vacuum system was closed, and Ar gas was introduced into the CVI furnace until the pressure reached atmospheric pressure, the gas release valve was opened and Ar gas introducing was stopped after the temperature inside the CVI furnace cooled to room temperature;

(7) The composite material was taken out, ultrasonically cleaned with ethanol for 70 min, and dried at 100 °C in a drying oven to obtain an anode material, wherein the size of silicon was 20 nm-70 nm.

Comparative Embodiment 1

This embodiment provided an anode material, and the specific preparation method therefor comprised: 90% D50=100 $\mu$m porous carbon and 10% PVB were performed VC mixing according to their mass percentages;
The subsequent steps were the same as those in Embodiment 1.

Comparative Embodiment 2

This embodiment provided an anode material, and the specific preparation method therefor comprised: 50% D50=100 $\mu$m porous carbon, 40% D50=80 $\mu$m porous carbon, and 10% PVB were performed VC mixing according to their mass percentages;
The subsequent steps were the same as those in Embodiment 1.

Comparative Embodiment 3

This embodiment provided an anode material, and the specific preparation method therefor comprised: 60% D50=800 $\mu$m porous carbon, 25% D50=60 $\mu$m porous carbon, 5% D50=30 $\mu$m porous carbon, and 10% PVB were performed VC mixing according to their mass percentages;
The subsequent steps were the same as those in Embodiment 1.

Comparative Embodiment 4

This embodiment provided an anode material, and the specific preparation method therefor comprised: 60% D50=100 $\mu$m porous carbon, 25% D50=90 $\mu$m porous carbon, 5% D50=30 $\mu$m porous carbon, and 10% PVB were performed VC mixing according to their mass percentages;
The subsequent steps were the same as those in Embodiment 1.

Comparative Embodiment 5

This embodiment provided an anode material, and the specific preparation method therefor comprised: 60% D50=100 $\mu$m porous carbon, 25% D50=60 $\mu$m porous carbon, 5% D50=10 $\mu$m porous carbon, and 10% PVB were performed VC mixing according to their mass percentages;
The subsequent steps were the same as those in Embodiment 1.

Comparative Embodiment 6

This comparative study used porous carbon with a mass ratio of 90% D50=50 $\mu$m to performed VC mixing with 10% PVB;
The subsequent steps were the same as those in Embodiment 1.
According to the testing method used above, the anode materials prepared in Embodiments 1-5 and Comparative Embodiments 1-6 were used as anode materials in lithium-ion batteries, and the test data shown in Tables 1 and 2 were obtained.

Table 1. Performance parameters of anode materials in embodiments

| Group / Performance parameters | Embodiment 1 | Embodiment 2 | Embodiment 3 | Embodiment 4 | Embodiment 5 |
|---|---|---|---|---|---|
| First discharge specific capacity (mAh/g) | 2079.2 | 2067.1 | 2023.4 | 2012.7 | 2013.5 |
| First coulombic efficiency ICE (%) | 90.9 | 90.5 | 90.7 | 90.6 | 90.3 |
| Expansion rate of electrode sheet thickness after 50 cycles of cycling (%) | 36.9 | 37.2 | 37.1 | 37.6 | 37.7 |
| Capacity retention rate after 50 cycles of cycling (%) | 89.8 | 88.2 | 87.9 | 88.4 | 89.5 |
| Average particle size of amorphous silicon (nm) | 60 | 85 | 90 | 75 | 55 |
| Silicon content of anode material (%) | 52 | 59 | 14 | 32 | 47 |
| Specific surface area of anode material ($m^2$/g) | 10.1 | 18.3 | 20.8 | 31.4 | 19.8 |
| Average pore size of etched material of anode material (nm) | 6 | 15 | 20 | 8 | 12 |
| Porosity of anode material (%) | 17 | 14 | 19 | 17 | 15 |
| C value of anode material | 175 | 133 | 117 | 163 | 88 |
| C value of etched material of anode material | 499 | 458 | 357 | 312 | 396 |
| Proportion of mesopores/micropores/macropores in anode material | 86/12/2 | 77/14/9 | 84/10/6 | 87/8/5 | 88/5/7 |
| Total pore volume of anode material ($cm^3$/g) | 0.03 | 0.041 | 0.015 | 0.042 | 0.030 |

| $D_2/D_1$ of anode material | 185 | 161 | 183 | 122 | 107 |
|---|---|---|---|---|---|
| Open porosity of anode material (%) | 55% | 58% | 65% | 61% | 55% |
| Filling degree of silicon in pores of porous carbon substrate (%) | 90 | 87 | 93 | 85 | 95 |

Table 2. Performance parameters of anode materials in embodiments and comparative embodiments

| Groups / Performance parameters | Compar ative Embodi ment 1 | Compar ative Embodi ment 2 | Compar ative Embodi ment 3 | Compar ative Embodi ment 4 | Compar ative Embodi ment 5 | Compar ative Embodi ment 6 |
|---|---|---|---|---|---|---|
| First discharge specific capacity (mAh/g) | 1735.4 | 1900.9 | 1835.6 | 1724.5 | 1793.9 | 1705.8 |
| First coulombic efficiency ICE (%) | 84.9 | 85.8 | 86.5 | 85.7 | 85.5 | 86.1 |
| Expansion rate of electrode sheet thickness after 50 cycles of cycling (%) | 41.2 | 40.5 | 39.8 | 39.8 | 38.4 | 38.2 |
| Capacity retention rate after 50 cycles of cycling (%) | 83.7 | 84.9 | 85.7 | 85.4 | 86.7 | 87.8 |
| Average particle size of amorphous silicon (nm) | 210 | 165 | 135 | 120 | 110 | 85 |
| Silicon content of anode material (%) | 37 | 39 | 41 | 38 | 39 | 36 |
| Specific surface area of anode material ($m^2/g$) | 20.5 | 15.3 | 11.8 | 12.8 | 13.9 | 12.1 |
| Average pore size of etched material of anode material (nm) | 65 | 55 | 10 | 12 | 13 | 9 |
| Porosity of anode material (%) | 41 | 28 | 29 | 32 | 26 | 25 |
| C value of anode material | 295 | 256 | 287 | 222 | 261 | 278 |

| | | | | | | |
|---|---|---|---|---|---|---|
| C value of etched material of anode material | 199 | 51 | 183 | 69 | 190 | 101 |
| Proportion of mesopores/micropores/macropores in anode material | 15/81/4 | 13/60/27 | 27/63/10 | 22/74/4 | 15/70/15 | 19/68/13 |
| Total pore volume of anode material ($cm^3/g$) | 0.041 | 0.079 | 0.065 | 0.051 | 0.070 | 0.039 |
| $D_2/D_1$ of anode material | 158 | 51 | 89 | 112 | 64 | 165 |
| Open porosity of anode material (%) | 48% | 45% | 45% | 41% | 42% | 51% |
| Filling degree of silicon in pores of porous carbon substrate (%) | 64 | 68 | 71 | 66 | 68 | 62 |

By analyzing the data in Tables 1 and 2, it could be found that by using the porous carbon substrate prepared in the technical solution of the present disclosure and the related CVI chemical vapor infiltration treatment process, the final prepared anode material had a higher and more uniform density, and silicon could penetrate into the pores of the porous carbon substrate.

Comparing Embodiment 1 with Comparative Embodiments 1 to 6, it was necessary to control the proportion of various porous carbons in the material, otherwise it would result in an unreasonable distribution of pores in the material, insufficient silicon content infiltrated, and an excessive proportion of pore volume (micropores, mesopores) in the final anode material, resulting in a high C value of the anode material and affected the particle strength of the material (which is prone to breakage during the rolling process); and the segregation and growth of silicon grains led to a decrease in the cyclic performance of the material.

Finally, it should be noted that the above embodiments were only used to illustrate the technical solution of the present disclosure, and not to limit it; although the present disclosure had been described in detail with reference to the aforementioned embodiments, those skilled in the art should understand that they could still modify the technical solutions described in the aforementioned embodiments, or equivalently replaced some or all of the technical features; and these modifications or replacements did not deviate from the essence of the corresponding technical solutions from the scope of the various embodiments of the present disclosure.

In addition, those skilled in the art can understand that although some embodiments herein include certain features included in other embodiments rather than other features, the combination of features of different embodiments implies that they are within the scope of the present disclosure and form different embodiments. For example, in the above claims, any one of the embodiments claimed for protection can be used in any combination. The information disclosed in this background section is only intended to deepen the understanding of the overall background of the present disclosure and should not be construed as an acknowledgement or any form of suggestion that this information constitutes prior art already known to those skilled in the art.

## Claims

1.   An anode material, wherein the anode material comprises an active material, the active material comprises a porous carbon substrate and silicon, and the pores and/or surface of the porous carbon substrate are distributed with the silicon; the adsorption constant C value of the anode material is C<200, and the open porosity of an etched material of the anode material is 50%-70%.

2. An anode material, wherein the anode material comprises an active material, the active material comprises a porous carbon substrate and silicon, and the pores and/or surface of the porous carbon substrate are distributed with the silicon; the adsorption constant C value of the anode material is C<200, the density of an etched material of the anode material is $\rho 1$, and the density of the anode material is $\rho 2$, $50\%\leq(\rho 2-\rho 1)/\rho 1\leq 80\%$.

3. The anode material according to claim 1 or 2, wherein the anode material satisfies at least one of the following conditions:

   (1) the particle size of the silicon is 1 nm-100 nm;
   (2) the pore size of the silicon of the etched material of the anode material is 0 $\mu$m-1 $\mu$m;
   (3) the filling degree of the silicon in the porous carbon substrate is 2:80%;
   (4) the density of the anode material is 1.8 g/cm$^3$-2.3 g/cm$^3$, and the density of the etched material of the anode material is 1 g/cm$^3$-1.5 g/cm$^3$;
   (5) the anode material has a pore structure, which comprises mesopores, micropores, and macropores, wherein the volume proportion of the mesopores in all pore structures is >75%, the volume proportion of the micropores in all pore structures is <25%, and the volume proportion of the macropores in all pore structures is <10%;
   (6) the anode material has a pore structure, and the total pore volume of the anode material measured by a nitrogen adsorption method is <0.05 cm$^3$/g;
   (7) the volume of closed pores in the anode material is $\leq 0.2$ cm$^3$/g;
   (8) the adsorption constant C value of the etched material of the anode material is 200<C<500;
   (9) in a nuclear magnetic resonance test of the anode material, there is a Si-C resonance peak between -10 ppm and 20 ppm with an intensity of $D_1$, and a Si-Si resonance peak between -90 ppm and 110 ppm with an intensity of $D_2$, and $D_2/D_1\geq 100$;
   (10) the particle size of the etched material of the anode material is 1 $\mu$m-50 $\mu$m;
   (11) the silicon comprises nano-silicon.

4. The anode material according to any one of claims 1-3, wherein the anode material further comprises a carbon coating layer located on at least partial surface of the active material.

5. The anode material according to claim 4, wherein the anode material satisfies at least one of the following conditions:

   (1) the thickness of the carbon coating layer is 1 nm-100 nm;
   (2) the mass percentage content of silicon in the anode material is 10%-90%;
   (3) the specific surface area of the anode material is 0.5 m$^2$/g-50 m$^2$/g; and
   (4) the average particle size of the anode material is 1 $\mu$m-25 $\mu$m.

6. A preparation method for an anode material, wherein the preparation method comprises:

   mixing and heat treating N different particle sizes of porous carbon powders and a binder to obtain a porous carbon substrate, wherein N$\geq 2$; and
   compounding silicon on the porous carbon substrate to obtain the anode material.

7. The preparation method according to claim 6, wherein the N different particle sizes of the porous carbon powders are arranged in ascending order according to the particle size, and the porous carbon powders satisfy at least one of the following conditions:

   (1) in the two adjacent porous carbon powders, the ratio of D50 of the porous carbon powder with a smaller particle size to D50 of the porous carbon powder with a larger particle size is 0.25-0.9;
   (2) in the two adjacent porous carbon powders, the ratio of the mass of the porous carbon powder with a smaller particle size to the mass of the porous carbon powder with a larger particle size is 0.05-0.75;
   (3) in the two adjacent porous carbon powders, D10 of the porous carbon powder with a larger particle size is not less than D90 of the porous carbon powder with a smaller particle size;
   (4) when N=3, the D50 ratio of the porous carbon powder with a larger size to the porous carbon powder with a medium size to the porous carbon powder with a smaller size is (4-7):(2-3.5):1;
   (5) when N=3, the mass ratio of the porous carbon powder with a larger size to the porous carbon powder with a medium size to the porous carbon powder with a smaller size is (18-25):(6-12):1;
   (6) when N=3, the D50s of the porous carbon powder with a larger size, the porous carbon powder with a medium size, and the porous carbon powder with a smaller size are 100 $\mu$m-500 $\mu$m, 70 $\mu$m-400 $\mu$m, and 20 $\mu$m-130 $\mu$m,

respectively;

(7) when N=3, the average pore size of the porous carbon substrate prepared from three different particle sizes of the porous carbon powder is 2 nm-50 nm;

(8) the binder comprises polyvinyl butyral; and

(9) the mass ratio of the N different particle sizes of the porous carbon powders to the mass of the binder is (5-20):1.

8. The preparation method according to claim 6, wherein the heat treating comprises: heating, pressurizing, and cooling the mixed material after mixing to obtain the porous carbon substrate.

9. The preparation method according to claim 6, wherein a chemical vapor infiltration method is used to perform a thermal decomposition reaction to a reaction gas, so that silicon is deposited on the surface and/or in pores of a porous carbon substrate to obtain an anode material.

10. A lithium-ion battery, wherein raw materials the lithium-ion battery comprise the anode material according to any one of claims 1-5 or the anode material prepared by the preparation method according to any one of claims 6-9.

FIG. 1

Mixing and heat treating N different particle sizes of porous carbon powders with a binder to obtain a porous carbon substrate, wherein $N \geqslant 2$

Compounding silicon on the porous carbon substrate to obtain an anode material

## INTERNATIONAL SEARCH REPORT

| International application No. |
|---|
| **PCT/CN2023/128230** |

| A. | CLASSIFICATION OF SUBJECT MATTER |
|---|---|

H01M4/36(2006.01)i; H01M4/583(2010.01)i; H01M4/134(2010.01)i

According to International Patent Classification (IPC) or to both national classification and IPC

| B. | FIELDS SEARCHED |
|---|---|

Minimum documentation searched (classification system followed by classification symbols)

IPC: H01M4/-

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 负极, 碳, 硅, 多孔, 介孔, 孔隙, 包覆, porous, silicon, carbon, negative electrode, coat+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115132997 A (GUANGDONG OPPO MOBILE TELECOMMUNICATIONS CORP., LTD. et al.) 30 September 2022 (2022-09-30) description, paragraphs [0028]-[0054], [0063]-[0071], and [0091] | 1-10 |
| A | CN 115207331 A (BEIJING INSTITUTE OF TECHNOLOGY) 18 October 2022 (2022-10-18) entire description | 1-10 |
| A | CN 106450192 A (ZHEJIANG TIANNENG ENERGY TECHNOLOGY CO., LTD.) 22 February 2017 (2017-02-22) entire description | 1-10 |
| A | CN 107293700 A (BYD CO., LTD.) 24 October 2017 (2017-10-24) entire description | 1-10 |
| A | WO 2021241748 A1 (SHOWA DENKO K. K.) 02 December 2021 (2021-12-02) entire description | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 January 2024** | **20 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/128230**

| Patent document cited in search report | | | Publication date (day/month/year) | Patent family member(s) | | | Publication date (day/month/year) |
|---|---|---|---|---|---|---|---|
| CN | 115132997 | A | 30 September 2022 | None | | | |
| CN | 115207331 | A | 18 October 2022 | None | | | |
| CN | 106450192 | A | 22 February 2017 | None | | | |
| CN | 107293700 | A | 24 October 2017 | None | | | |
| WO | 2021241748 | A1 | 02 December 2021 | US | 2023207780 | A1 | 29 June 2023 |
| | | | | JPWO | 2021241748 | A1 | 02 December 2021 |
| | | | | WO | 2021241747 | A1 | 02 December 2021 |
| | | | | EP | 4160728 | A1 | 05 April 2023 |
| | | | | KR | 20230016213 | A | 01 February 2023 |
| | | | | EP | 4160727 | A1 | 05 April 2023 |
| | | | | JPWO | 2021241747 | A1 | 02 December 2021 |
| | | | | US | 2023231111 | A1 | 20 July 2023 |
| | | | | KR | 20230015992 | A | 31 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022117004432